Europäisches Patentamt

European Patent Office

Office européen des brevets

(11) Publication number : **0 526 114 A1**

(12) **EUROPEAN PATENT APPLICATION**

(21) Application number : **92306769.8**

(22) Date of filing : **23.07.92**

(51) Int. Cl.⁵ : **G06F 12/14**

(30) Priority : **29.07.91 US 736993**

(43) Date of publication of application :
**03.02.93 Bulletin 93/05**

(84) Designated Contracting States :
**DE FR GB IT**

(71) Applicant : **MOTOROLA, INC.**
**1303 East Algonquin Road**
**Schaumburg, IL 60196 (US)**

(72) Inventor : **Moyer, William C.**
**1005 Pier Branch Road**
**Dripping Springs, Texas 78620 (US)**
Inventor : **Gutierrez, Joseph A.**
**11404 Esperanza Drive**
**Austin, Texas 78739 (US)**

(74) Representative : **Hudson, Peter David et al**
**MOTOROLA European Intellectual Property**
**Operations Jays Close Viables Industrial**
**Estate**
**Basingstoke Hants RG22 4PD (GB)**

(54) **A method and apparatus for performing address translation in a data processor using masked protection indirection page descriptors.**

(57) A method and apparatus are provided for using a new type of table descriptor in a memory management system (24, 26) for address translation. A table walking process is used to obtain a logical to physical address translation from a set of translation tables (50, 52). The status of physical memory pages is maintained in page descriptors (58, 60), which are stored in the lowest level translation tables. The page descriptors (58, 60) contain the address of a physical page frame into which the logical page address is mapped. In addition each page descriptor (58, 60) contains page-level protection and control information. An indirect page descriptor (58) allows the memory management system (24, 26) to use a common page descriptor to map multiple logical pages to a physical memory page, under variable protections. The indirect page descriptor (58) includes a descriptor type information field, and functions as a pointer to an actual page descriptor (60).

FIG.4

EP 0 526 114 A1

## Field of the Invention

This invention relates generally to data processors, and more particularly to data processors which perform address translation.

## Background of the Invention

Today's high performance data processing systems rely upon sophisticated memory management systems to translate logical program addresses into real (physical) addresses. Many of these memory management systems employ address translation caches (ATC's) to perform high speed address translation, thereby enhancing the performance of the data processing system. Generally, the address translation caches (e.g. data and instruction) store the results of the most recent traversals of the memory based translation tables, which are stored in a main memory. On each memory access, a logical program address is compared to all entries in the appropriate ATC (data or instruction) to locate the requisite logical to physical mapping. When the ATC does not contain the requisite logical to physical mapping, a translation "miss" occurs, and a hardware state machine (or a software routine) is invoked to walk the appropriate memory based translation tables to retrieve the logical to physical mapping.

Generally, the translation tables are organized in a multi-level hierarchy (e.g. segment table, page table), in order to minimize the size of the translation tables, and the memory management system accesses the translation tables via address translation descriptors. The address translation descriptors are comprised generally of three basic components: 1) an address which is either a pointer to the next lower level in the table hierarchy or, at the very end of the chain, the physical memory address of the page being mapped, 2) a set of access privilege rights (e.g. read/write or read only) to all pages below this level of the table hierarchy, and 3) status bits for maintaining state information for the page (e.g. used, modified). Typically, the status information for physical pages is maintained in page descriptors, which are stored in the lowest level table (i.e. page table). Since this status information is used for physical page maintenance, it is most efficient to use a single page descriptor to store the status information. In the prior art systems, however, using a single page descriptor to store the status information is only possible when all mappings to a given physical page have identical access rights. Consequently, in the prior art systems, it is not possible to efficiently allow different processes to have different access rights to the same physical page, without using multiple page descriptors to distinguish the differing permissions (read/write versus read-only).

The use of multiple page descriptors to distinguish the differing permissions significantly increases the amount of memory space required for storing the translation tables. Thus, it is desirable to provide a mechanism which accomplishes the foregoing objectives, without using multiple page descriptors to distinguish between the different access rights to the same physical page.

## Summary of the Invention

A method and apparatus for performing address translation using a masked indirection page descriptor in a data processing system is provided. The data processing system includes a main memory for storing a set of address translation tables and a memory management unit (MMU) for using the set of address translation tables to obtain a logical to physical address translation. The MMU maps a plurality of logical pages to a common page descriptor, while permitting different memory accesses to have different access right to a physical memory page without using multiple page descriptors to distinguish the differing permissions.

When an address translation cache (ATC) in the MMU does not contain a required logical to physical address translation, a translation controller performs a tablewalk to retrieve a memory page descriptor from the set of address translation tables in main memory. During the tablewalk, the translation controller uses an area descriptor to traverse a segment translation table, and a segment descriptor to traverse a page translation table to thereby access the memory page descriptor. The memory page descriptor comprises a page descriptor address and a descriptor type information field. Control logic circuitry in the translation controller reads the descriptor type information field of the memory page descriptor, and uses the page descriptor address as a pointer to the common memory page descriptor, when the descriptor type field contains a certain logic value. The common memory page descriptor includes an intermediate set of control and protection bits.

When the descriptor type contains the certain logic value, the control logic circuitry masks the intermediate set of control and write protection bits of the common memory page descriptor. The control logic circuitry determines the final control and write protection bits for the memory page by logically ORing the control and write protection bits for the corresponding area and segment descriptors.

Brief Description of the Drawings

FIG. 1 is a block diagram of a preferred embodiment of a data processing system for utilizing the present invention.

FIG. 2 is a block diagram of the memory management unit (MMU) of FIG. 1, in accordance with a preferred embodiment of the present invention.

FIG. 3 is an illustration of the format of a set of address translation descriptors for use in the preferred embodiment of the present invention.

FIG. 4 is a block diagram illustrating a hardware tablewalk sequence, used in the preferred embodiment of the present invention.

FIG. 5 is a partial schematic diagram of the control logic circuitry of the MMU of FIG. 2, in accordance with a preferred embodiment of the present invention.

Detailed Description of a Preferred Embodiment

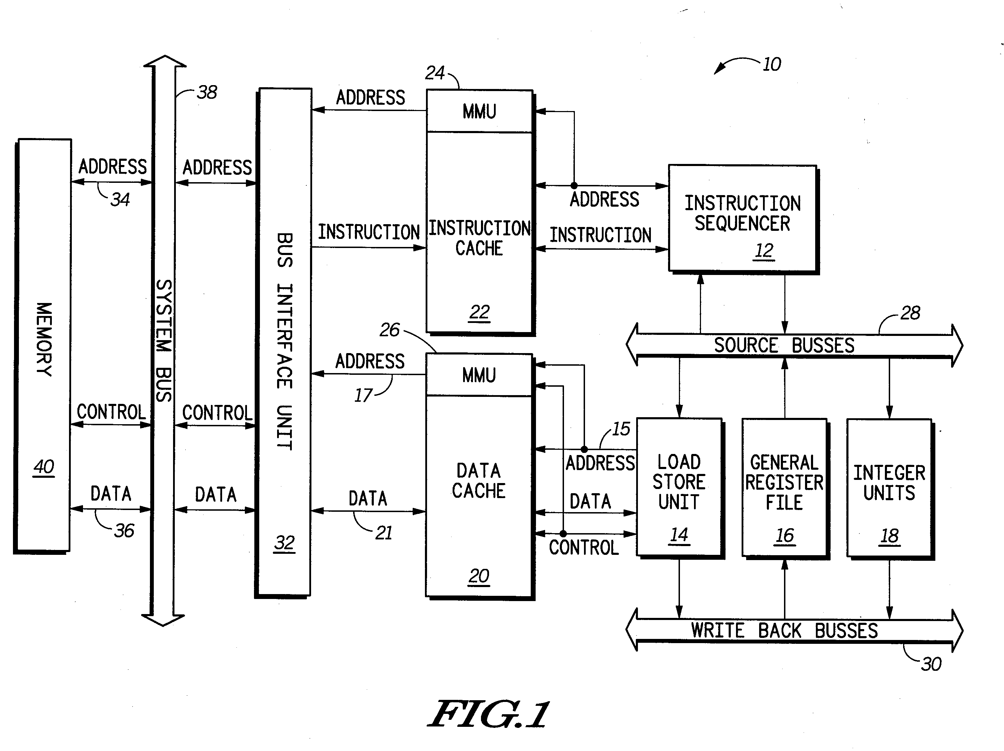

Shown in FIG. 1 is a block diagram illustrated an integrated circuit data processing system 10 for implementing the present invention. In a preferred embodiment, data processing system 10 comprises an instruction sequencer 12, load/store units 14, register files 16, and integer execution units 18. The instruction sequencer 12 provides control over the data flow amount to the execution units 18, and the register files 16. Accordingly, the instruction sequencer 12 implements a 4-stage (fetch-decode-execute-writeback) master instruction pipeline, enforces data interlocks, dispatches (issues) instructions to available execution units 18, directs data from the register files 16 onto and off of the busses 28 and 30, and maintains a state history so it can back the system 10 up in the event of an exception.

In the preferred embodiment, data processing system 10 uses a Harvard architecture with separate paths for the instruction stream and the data stream. Separate caches 20, and 22 are used to supply the two streams. In accordance with the preferred embodiment, the sequencer 12 is responsible for instruction flow in system 10. Sequencer 12 retrieves instructions from an instruction cache 22, and dispatches the instructions to one of the execution units 18 based on availability and inter-instruction data dependencies. When an instruction "issues", the source data for that instruction is transferred from a source register in the general register file 16 onto the source operand busses 28, and the associated destination register is marked "busy". A hardware scoreboard maintains a record of all busy registers. The execution unit 18, to which the instruction issues, then reads data off the appropriate source bus 30.

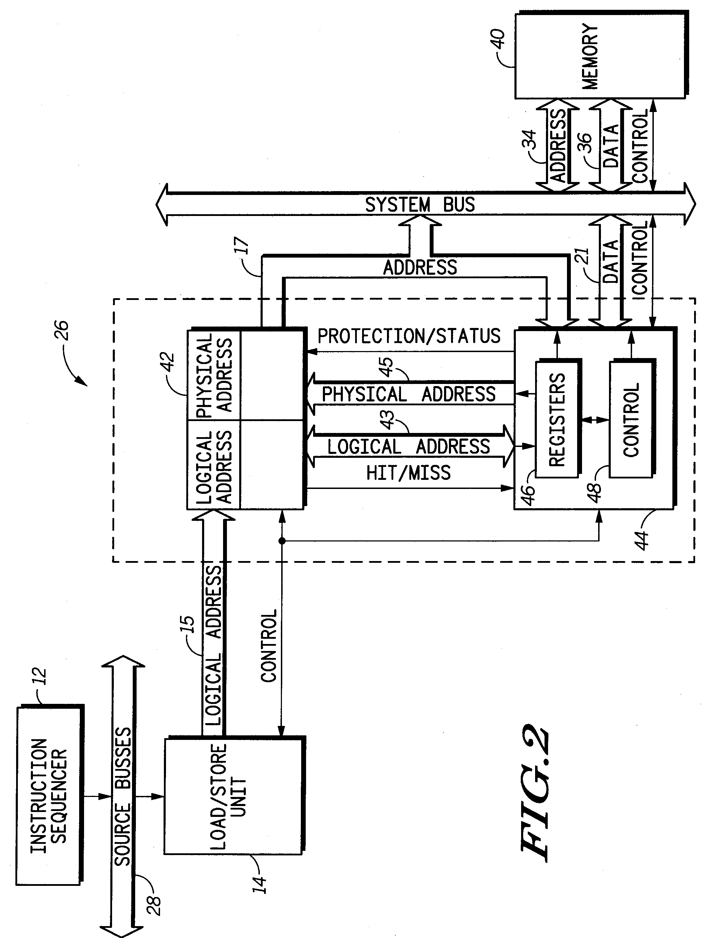

Data processing system 10 employs separate instruction and data memory management units (MMUs) 24 and 26, respectively. In the preferred embodiment, each unit provides two 4G Byte (User/Supervisor) logical address spaces and enforces access privileges on segment and page levels for both of these spaces. In accordance with the preferred embodiment, the internal structure of MMUs 24 and 26 is the same. For the purpose of simplicity, FIG. 2 illustrates a block diagram for the data MMU 26; however, each of the MMUs 24 and 26 comprise an address translation cache (ATC) 42 and a translation controller 44. On each memory reference, a logical address is looked up in one of the appropriate ATCs 42 in parallel with the caches 20 and 22 (FIG. 1) being checked for the data/instruction, respectively. Each ATC 42 implements a fully associative look-up. The referenced logical address is compared against all entries in the appropriate ATC 42 (instruction or data). If the upper bits of the referenced logical address match a logical address tag in one of the ATCs 42 a "hit" occurs, and the matching entry is used to map the referenced logical address to the physical memory address. The physical address is then sent to the data (or instruction) cache, and the data (or instruction) is provided to the load store unit 14, or instruction sequencer 12, respectively, In the case where the physical memory address is not stored in the data (or instruction) cache 20 or 22, the physical address to sent to memory 40. Accordingly, the physical address is transferred via bus 17 to a bus interface unit 32 (FIG. 1) and via the BIU 32 (FIG. 1), which sends the physical address to memory 40, via the system bus 38.

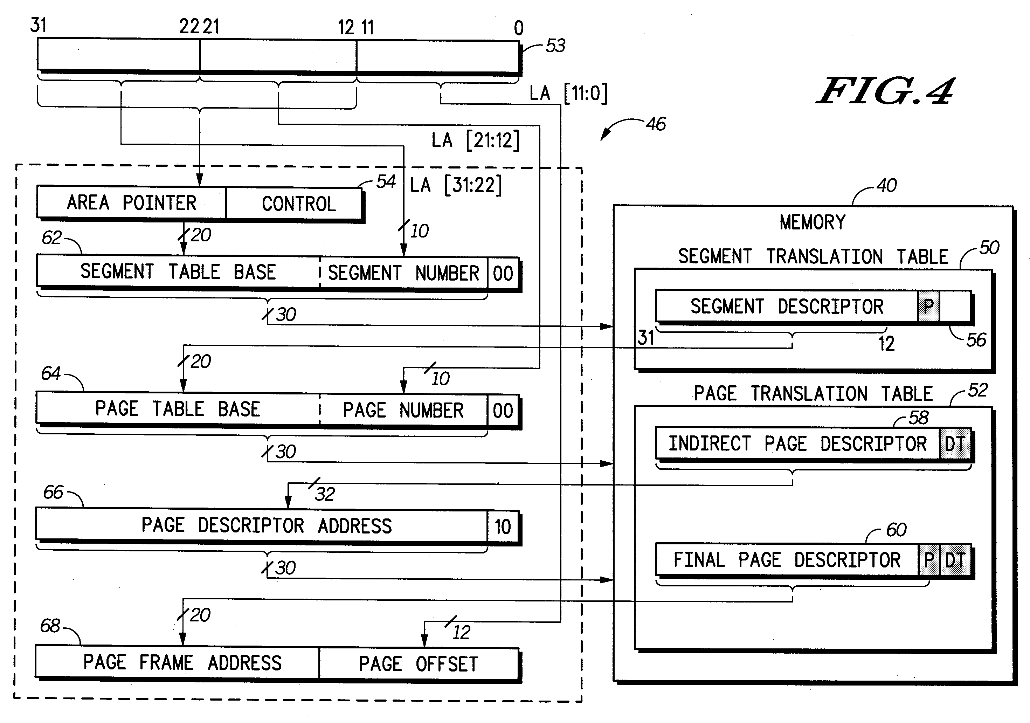

In cases where the requisite logical to physical mapping is not contained in the ATC 42, a hardware state machine (or a software routine) is invoked to walk the appropriate memory based tables to retrieve the logical to physical address mapping. A set of memory mapping (translation) tables, normally maintained by the operating system, are stored in memory 40. These translation tables describe the mapping of the logical program addresses (virtual) address to physical memory addresses. In the preferred embodiment, the ATCs 42 store the results of recent traversals of the memory based tables. When the upper bits of the referenced logical address 53 (FIG. 4) do not match any entries in the ATC 42 a "miss" occurs, and ATC 42 provides a MISS signal to the translation controller 44. In response to receiving the MISS signal, the translation controller 44 proceeds to perform a two-level tablewalk to retrieve the requisite mapping.

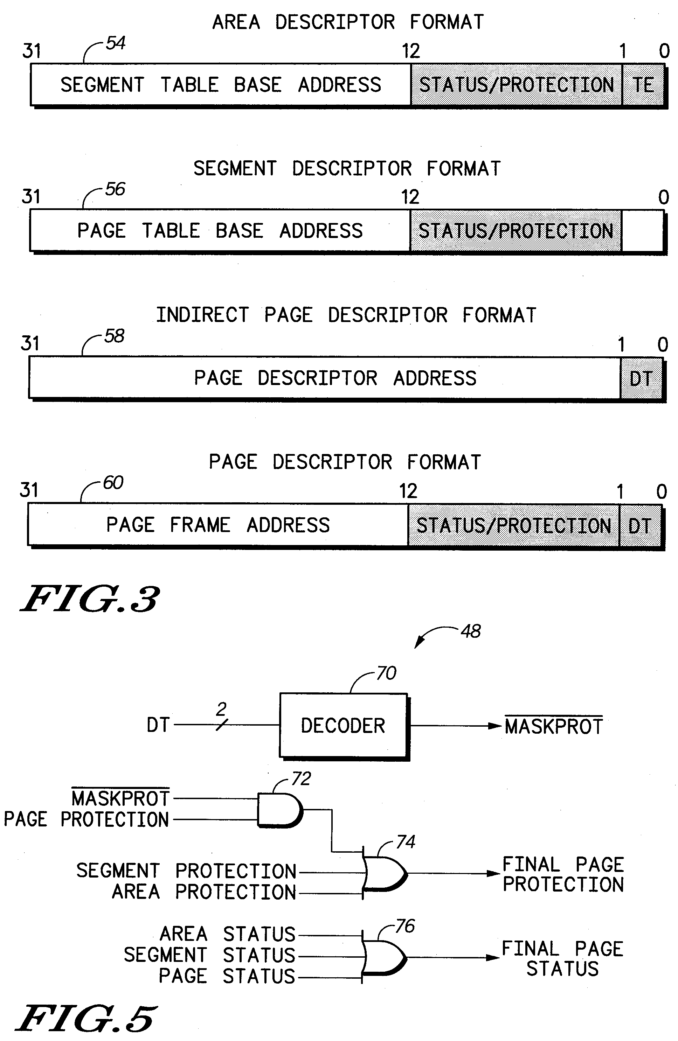

In a preferred embodiment of the present invention, the translation controller comprises a set of registers 46 and control logic 48 for reading and manipulating information stored in the registers 46. In the present invention, the memory based address translation tables 50 and 52 (FIG. 4) are defined and accessed via address translation descriptors, shown in FIG. 3. These descriptors have three basic components: 1) an address which is either a pointer to a next lower level in the table hierarchy or, at the very end of the chain, a pointer to a physical memory address of the page being mapped, 2) a set of access privilege rights to all pages below this level of the table hierarchy, and 3) some status bits for maintaining state information for the page.

As shown in FIG. 3, at the very top of the table hierarchy are area descriptors 54. In accordance with the preferred embodiment, the area descriptor 54 is the root of all memory based mapping tables 50 and 52, and are stored in registers 46. The area descriptors 54 point to segment tables 50 in memory 40. Each area descriptor 54 contains the base address of a segment table and a set of control bits. The area descriptors 54 enable the ATC tablewalk address translation via the translation enable (TE) bit. In the preferred embodiment, each segment table 50 contains 1024 segment descriptors 56, each of which points to page tables 52 in memory 40. Each segment descriptor 56 contains the base address of a page table, and segment-level status and protection (P) information. Similarly, each page table 52 contains 1024 page descriptors. Each page descriptor 60 contains the address of a physical page frame into which the logical page address is mapped. Furthermore, each page descriptor 60 contains the page-level status and protection (P) information bit, and a descriptor type (DT) field. Table I below illustrates the encoding for the DT field.

### TABLE I

| DT Field Type | Descriptor |
|---|---|
| 0 0 | Invalid Descriptor |
| 0 1 | Valid Page Descriptor |
| 1 0 | Masked Protection Indirect Descriptor |
| 1 1 | Indirect Descriptor |

Accordingly, if the DT field in a page descriptor is equal to 11 or 10, then the descriptor is actually a pointer to the actual page descriptor. In the present invention, such a pointer is referred to as an Indirect Page Descriptor 58, and its format is shown in FIG. 4. Thus, a page descriptor may be a direct page descriptor 60 which describes the actual mapping and status information for a memory page, or an indirect descriptor 58 which points to an actual (final) page descriptor.

Referring again to FIG. 2, when an ATC miss occurs, the appropriate MMU 24 or 26 selects an ATC entry for replacement using a FIFO algorithm, and then performs a two level tablewalk, to retrieve the page descriptor for the referenced logical address 53. As shown in FIG. 4, the tablewalk begins at a Segment Table Base Address which is found in an Area Descriptor 54. The Segment Table Base Address is concatenated with the most significant bits {31:22} of the referenced logical address 53, and the result is zero extended to form a first translation descriptor address, which is temporarily stored in a first register 64. Using the Segment Table Base Address, the segment table 50 is indexed by the most significant bits {31:22} of logical address 53 to retrieve the Page Table Base Address from a segment descriptor 56. The Page Table Base Address is concatenated with the next 10 lessor significant bits {21:12} of the referenced logical address 53 to form a second translation descriptor address, which is then stored in a second register 66. Using the Page Table Base Address, the page table 52 is indexed by {LA 21: 12} to retrieve a selected page descriptor.

The control logic 48 reads the DT field of the selected page descriptor 58. As previously indicated, when the DT field in the selected page descriptor is equal to 11 or 10, the selected page descriptor is an Indirect Page Descriptor 58 and is, therefore, actually a pointer to a final page descriptor 60. The translation controller 44 uses the selected (indirect) page descriptor 58 to retrieve the final page descriptor 60 from the page translation table 52. In the present invention, MMUs 24 and 26 support two indirection modes using the DT field of the indirect page descriptor 58. A first indirection mode occurs when an accessed page descriptor has the indirection mode set (DT=11). In such cases, the MMU 24 uses the accessed indirect (common) page descriptor (not shown) as an address to the actual (final) page descriptor 60. The control logic circuitry 48 then determines the protection and control information for the accessed memory page by logically ORing all control (status) and protection bits found in the corresponding area, segment and page descriptors.

4

In accordance with the preferred embodiment of the present invention, in a second indirection mode, an accessed indirect (common) page descriptor 58 has the masked protection indirection mode set (DT=10), as shown in FIG. 3. Accordingly, the translation controller 44 uses the accessed indirect (common) page descriptor 58 as the address to the actual (final) page descriptor 60; however, the protection and control bits for actual (final) page descriptor 60 are ignored by the control logic circuitry 48. Instead, the control logic 48 determines the final protection and control information of the accessed memory page by logically ORing the protection and control bits from the corresponding area and segment descriptors, 54 and 56, respectively. Thus, using the common page descriptor, a single memory page may be marked as write protected (Read only) to one memory access, and not write protected (Read/Write) to another.

Upon completing the tablewalk, the translation controller 44 loads the 20 most significant bits of the missed (referenced) logical address 53 into the logical page address TAG (LOGICAL ADDRESS) of the ATC entry selected for replacement, via logical address bus 43. The translation controller 44 also loads the 20-bit Page Frame Address from the final page descriptor 60 into the lower half of the ATC 42 entry (PHYSICAL ADDRESS), via physical address bus 45. Furthermore, the translation controller 44 loads the results obtained from the logical OR of the protection bits found in the area, and segment descriptors into the lower half of the ATC entry.

Shown in FIG. 5 is partial schematic diagram of the control logic 48, in accordance with a preferred embodiment of the present invention. The decoder logic 70 is coupled to register 66 to read the descriptor type (DT) information field of a selected page descriptor. As indicated by Table 1, when the descriptor type information field contains a certain logic value (i.e. DT=10) the selected page descriptor is actually a pointer to the actual (final) page descriptor 60. In the preferred embodiment, decoder logic 70 receives a two bit input, representative of the descriptor type, and provides an output signal MASKPROT* indicative of whether or not the page descriptor is a masked protection indirection descriptor. In accordance with the preferred embodiment, decoder 70 indicates that the selected page descriptor is a masked indirection descriptor by providing a logic low MASKPROT* output signal. An AND gate 72 is coupled to the output of decoder logic 70, and register 68. AND gate 70 has a first input for receiving the MASKPROT* signal, a second input for receiving a page protection bit of the actual (final) page descriptor, and an output. When the MASKPROT* signal is a logic low, AND gate 72 provides a logic low signal. The logic low MASKPROT* signal is ORed with a segment protection bit from the corresponding segment descriptor 56, and an area protection bit from the corresponding area descriptor 54. The output of OR gate 74 determines the final page protection for the memory page selected by the page descriptor 60.

In the preferred embodiment, an OR gate 76 is coupled to each of the bit positions of each of the corresponding area, segment and page descriptors, 54, 56, and 60, respectively. Each OR gate 76 has a first input for receiving an area status bit, a second input for receiving a segment status bit, and a third input for receiving a page status bit for each of the corresponding descriptors. The collective outputs of the OR gates 76 determines the final page status information for the memory page selected by the page descriptor 60. Thus, in the present invention control logic 48 operates to determine when a selected page descriptor is a selected type (i.e. masked indirection descriptor). The control logic 48 then logically combines the information provided in the corresponding area, and segment descriptors to determine the final page protection. Similarly, the information provided in the corresponding area, segment, and final page descriptors is logically combined to provide the final page status information. Thus, the translation controller 44 uses the accessed indirect (common) page descriptor 58 as the address to the actual (final) page descriptor 60; however, the protection and control bits for actual (final) page descriptor 60 are ignored by the control logic circuitry 48.

While the present invention has been described in a preferred embodiment, it will be apparent to those skilled in the art that the disclosed invention may be modified in numerous ways and may assume many embodiments other than that specifically set out and described above. For example, the ATCs 42 may include a block address translation cache (BATC), to map large areas of the system and user memory (i.e. 512K to 64Mbytes) without usurping a large number of ATC entries, and a page address translation cache (PATC) for mapping pages of 4K bytes each, for example. Accordingly, the index bits derived from the referenced logical address may vary based upon the number of descriptors stored in the segment and page translation tables. Accordingly, it is intended by the appended claims to cover all modifications of the invention which fall within the true spirit and scope of the invention.

## Claims

1. In a data processing system (10) having a main memory (40) for storing a set of address translation tables (50, 52) and a memory management (24, 26) system for using said set of address translation tables (50, 52) to obtain a logical to physical address translation, a method for performing address translation using a masked protection indirection page descriptor (58) to map a plurality of logical memory pages to a common page descriptor (60) while allowing different memory accesses to have different access rights to each of said plurality of memory pages, said method comprising the steps of:

performing a tablewalk to retrieve a memory page descriptor (58) comprising a page descriptor address and a descriptor type information field from said set of address translation tables (50, 52), said tablewalk using a first descriptor (54) to traverse a first translation table (50), and a second descriptor (56) to traverse a second translation table (52) to thereby access said memory page descriptor (58) stored in said second translation table (52);

reading said descriptor type information field and using said page descriptor address (58) to point to said common memory page descriptor (60) when said descriptor type field contains a first logic value, said common memory page descriptor (60) including an intermediate set of control and access protection bits; and

masking said intermediate set of control and access protection bits of said common memory page descriptor (60), when said descriptor information field contains said first logic value, and using an alternate set of control and access protection bits of said first descriptor (54) and said second descriptor (56) to determine a final access protection mode for a physical memory page accessed using said common memory page descriptor (60).

2. The method of claim 1 wherein performing said table walk comprises the steps of:

retrieving said first descriptor (54) from a first control register in said memory management system (24, 26), said first descriptor (54) comprising a segment base address and a first set of control and access protection bits, and combining said segment base address with a first set of bits from a referenced logical address (53) to generate a first translation address (62), said first translation address being stored in a second control register;

using said first translation address (62) to traverse said first translation table (50), said first translation address (62) pointing to said second descriptor (56) stored in said first translation table (50) in said main memory (40), said second descriptor (56) comprising a page base address and a second set of control and access protection bits;

retrieving said page base address from said main memory (40), and combining said page base address with a second set of bits from said referenced logical address to generate a second translation address (64), said second translation address (64) being stored in a third control register; and

using said second translation (64) address to traverse a second translation table (52), said second translation address (64) pointing to said memory page descriptor (58) stored in said second translation table (52) in said main memory (40).

3. The method of claim 2 wherein the step of masking said intermediate set of control and access protection bits comprises the step of logically ORing said first set of control and access protection bits with said second set of control and access protection bits, a logical result thereof determine said final access protection mode for a physical memory page accessed using said common memory page descriptor (60).

4. In a data processing system (10) having a main memory (40) for storing a set of address translation tables (50, 52) and a memory management system (24, 26) for using said set of address translation tables (50, 52) to obtain a logical to physical address translation, a method for allowing a plurality of logical memory pages to be mapped through a common memory page descriptor (60) while allowing different memory accesses to have different access rights to each of said plurality of memory pages, said method comprising the steps of:

performing a tablewalk to retrieve a memory page descriptor (58) comprising a page descriptor address and a descriptor type information field from said set of address translation tables (50, 52); said tablewalk using a first descriptor (54) to access a second descriptor (56) stored in a first translation table (50), and using said second descriptor (56) to access said memory page descriptor (58) stored in a second translation table (52), said first descriptor (54) including a first set of control and access protection bits, and said second descriptor (56) including a second set of control and access protection bits;

reading said descriptor type information field and using said page descriptor address to retrieve said common memory page descriptor (60) when said descriptor type field contains a first logic value, said common memory page descriptor (60) including a third set of control and access protection bits; and

masking said third set of control and access protection bits, when said descriptor information field contains said first logic value, and using a set of control and access protection bits of said first descriptor (54) and said second descriptor (56) to determine a final access protection mode for a physical memory page accessed using said common memory page descriptor (60).

5. The method of claim 4 wherein performing said two level table walk comprises the steps of:

retrieving said first descriptor (54) from a first control register in said memory management system (24, 26), said first descriptor (54) comprising a segment base address and said first set of control and access protection bits, and combining said segment base address with a first set of bits from a referenced logical address (53) to generate a first translation address (62), said first translation address (62) being stored in a second control register;

using said first translation address (62) to traverse said first translation table (50), said first translation address (62) pointing to said second descriptor (56) stored in said first translation table (50) in said main memory (40), said second descriptor (56) comprising a page base address and said second set of control and access protection bits;

retrieving said page base address from said main memory (40), and combining said page base address with a second set of bits from said referenced logical address to generate a second translation address (64), said second translation address (64) being stored in a third control register; and

using said second translation address to traverse (64) a second translation table (52), said second translation address pointing to said memory page descriptor stored in said second translation table in said main memory (40).

6. The method of claim 5 wherein the step of masking said third set of control and access protection bits comprises the step of logically ORing said first set of control and access protection bits with said second set of control and access protection bits, a logical result thereof determining a final set of control and access protection bits, said final set of control and access protection bits indicating said final access protection mode for said physical memory page accessed using said common memory page descriptor (60).

7. A data processor (12, 14-18, 20-22, 24, 26, 28, 30, 32) coupled to an external memory (40) via a system communications bus (38), said data processor having execution means (14) and memory management means (24, 26) for performing logical to physical address translation using a set of address translation tables (50, 52) stored in said external memory (40), said memory management means (24, 26) mapping a plurality of logical memory pages to a common memory page descriptor (60) while allowing different memory accesses to have different access rights to each of said plurality of memory pages, said memory management means (24, 26) comprising:

translation control means (44) for performing a tablewalk to retrieve a logical to physical address translation from said external memory (40), said translation control means using a first descriptor (54) to access a second descriptor (56) stored in a first translation table (50), and using said second descriptor (56) to access a memory page descriptor (58) stored in a second translation table (52), where said memory page descriptor (58) comprises a descriptor type information field and a page descriptor address, said first descriptor (54) includes a first set of control and access protection bits, and said second descriptor (56) includes a second set of control and access protection bits, said translation control means (44) comprising:

storage means (46) for storing said first descriptor (54), said second descriptor (56), and said memory page descriptor (58); and

control means (48) coupled to said storage means (46) for reading said descriptor type information field of said memory page descriptor (58) and using said page descriptor address to point to a common memory page descriptor (60) when said descriptor type field contains a first logic value, said control means (48) masking an intermediate set of control and access protection bits of said common memory page descriptor (60), when said descriptor information field contains said first logic value, and using said first and said second set of control and protection bits to determine a final set of access protection bits for a physical memory page accessed using said common memory page descriptor (60).

8. The memory management means of claim 7 further comprising address translation means (42) coupled to said translation controller means (44), for receiving a referenced logical program address from said execution means , and for translating said referenced logical program address into a physical address, said address translation (42) means providing a first control signal to said translation controller (44) when said referenced logical program address matches one of a plurality of logical to physical address translation entries stored in said address translation means (42), and providing a second control signal to said translation controller (44) when said referenced logical program address does not match one of said plurality of logical to physical address translation entries.

**9.** The memory management means (24, 26) of claim 8 wherein said control means (48) comprises ORing means (72, 72, 76) coupled to said storage means (46) for logically ORing said first set of control and access protection bits with said second set of control and access bits to determine said final set of access protection bits for said physical memory page accessed using said common memory page descriptor (60).

**10.** A data processor (12, 14-18, 20-22, 24, 26, 28, 30, 32) coupled to an external memory (40) via a system communications bus (38), said data processor having execution means (14) and memory management means (24, 26) for performing logical to physical address translation using a set of address translation tables (50, 52) stored in said external memory (40), said memory management means (24, 26) mapping a plurality of logical pages to a common memory page descriptor (60) while allowing different memory accesses to have different access rights to each of said plurality of memory pages, said memory management means (24, 26) comprising:

address translation means (42) coupled to said translation controller means (44), for receiving a referenced logical program address from said execution means (14), and for translating said referenced logical program address into a physical address, said address translation means (42) providing a first control signal to said translation controller (44) when said referenced logical program address matches one of a plurality of logical to physical address translation entries stored in said address translation means (42), and providing a second control signal to said translation controller (44) when said referenced logical program address does not match one of said plurality of logical to physical address translation entries

translation control means (44) coupled to said address translation means (42) for performing a tablewalk to retrieve a logical to physical address translation from said external memory (40), in response to receiving said second control signal from said address translation means (42), said translation control means, said translation control means (44) comprising:

storage means (46) for storing a first descriptor (54), said first descriptor (54)being used to traverse a first translation table (50) in said external memory (40) to retrieve a second descriptor (56), said said second descriptor (56) being stored in said storage means (46) and used to traverse a second translation table (52) to retrieve said memory page descriptor (58), said memory page descriptor (58) comprising a descriptor type information field and a page descriptor address; and

control means (48) coupled to said storage means (46) for reading said descriptor type information field of said memory page descriptor (58) and using said page descriptor address to point to a common memory page descriptor (60) when said descriptor type field contains a first logic value, said control means (48) masking an intermediate set of control and access protection bits of said common memory page descriptor (60), when said descriptor information field contains said first logic value, and using an alternate set of control and protection bits generated using said first (54) and said second descriptor (56) to determine a final set of access protection bits for a physical memory page accessed using said common memory page descriptor (60).

**FIG.1**

FIG.2

EP 0 526 114 A1

## AREA DESCRIPTOR FORMAT

| 31 | | 12 | 1 | 0 |
|---|---|---|---|---|
| SEGMENT TABLE BASE ADDRESS | | STATUS/PROTECTION | TE | |

*54*

## SEGMENT DESCRIPTOR FORMAT

| 31 | | 12 | 0 |
|---|---|---|---|
| PAGE TABLE BASE ADDRESS | | STATUS/PROTECTION | |

*56*

## INDIRECT PAGE DESCRIPTOR FORMAT

| 31 | | 1 | 0 |
|---|---|---|---|
| PAGE DESCRIPTOR ADDRESS | | DT | |

*58*

## PAGE DESCRIPTOR FORMAT

| 31 | | 12 | 1 | 0 |
|---|---|---|---|---|
| PAGE FRAME ADDRESS | | STATUS/PROTECTION | DT | |

*60*

## FIG.3

*48*

DT —2—→ [DECODER *70*] —→ $\overline{\text{MASKPROT}}$

$\overline{\text{MASKPROT}}$
PAGE PROTECTION —→ [AND *72*]

SEGMENT PROTECTION
AREA PROTECTION —→ [*74*] —→ FINAL PAGE PROTECTION

AREA STATUS
SEGMENT STATUS
PAGE STATUS —→ [*76*] —→ FINAL PAGE STATUS

## FIG.5

FIG.4

31        22 21        12 11        0
53

LA [11:0]

46

LA [21:12]

54 | LA [31:22]

AREA POINTER · | CONTROL

62
/20                                    /10

SEGMENT TABLE BASE | SEGMENT NUMBER | 00

/30

64
/20                                    /10

PAGE TABLE BASE | PAGE NUMBER | 00

/30

66
/32

PAGE DESCRIPTOR ADDRESS | 10

/30

68
/20                                    /12

PAGE FRAME ADDRESS | PAGE OFFSET

40

MEMORY

SEGMENT TRANSLATION TABLE        50

SEGMENT DESCRIPTOR | P

31                                    12
56

PAGE TRANSLATION TABLE        52

58
INDIRECT PAGE DESCRIPTOR | DT

60
FINAL PAGE DESCRIPTOR | P | DT

EP 0 526 114 A1

EP 0 526 114 A1

**European Patent Office**

## EUROPEAN SEARCH REPORT

Application Number

EP 92 30 6769

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 766 537 (ZOLNOWSKY)<br>* column 3, line 61 - column 4, line 67 *<br>* column 15, line 36 - column 16, line 14 *<br>* column 22, line 59 - column 23, line 4 *<br>--- | 1-10 | G06F12/14 |
| A | ELECTRONIC ENGINEERING<br>vol. 58, no. 715, July 1986, LONDON GB<br>pages 59 - 68<br>C. GAY 'M68000 family memory management - part 2'<br>* page 59, column 2, line 24 - page 63, column 1, line 3; figures 1,3 *<br>--- | 1-10 | |
| A | EP-A-0 175 398 (N.V. PHILIPS' GLOEILAMPENFABRIEKEN)<br>* the whole document *<br>--- | 1,2,4,5, 7,10 | |
| A | PATENT ABSTRACTS OF JAPAN<br>vol. 11, no. 68 (P-553)1987<br>& JP-A-61 231 642 ( HITACHI )<br>* abstract * | 1,4,7,10 | |
| | ----- | | TECHNICAL FIELDS SEARCHED (Int. Cl.5)<br><br>G06F |

The present search report has been drawn up for all claims

| Place of search | Date of completion of the search | Examiner |
|---|---|---|
| BERLIN | 05 NOVEMBER 1992 | MASCHE C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

13